# EUROPÄISCHE PATENTSCHRIFT

(11) **EP 2 557 348 B1**
(45) Veröffentlichungstag und Bekanntmachung des Hinweises auf die Patenterteilung: **16.03.2016**
(21) Anmeldenummer: 11006602.4
(22) Anmeldetag: 11.08.2011
(51) Int. Cl.: F16T 1/20, B01D 45/16

(54) **Kondensatabscheider**
Condensate separator
Séparateur de condensat

(43) Veröffentlichungstag der Anmeldung: 13.02.2013
(73) Patentinhaber: Festo AG & Co. KG, 73734 Esslingen (DE)
(72) Erfinder: Batsch, Christoph, 73092 Heiningen (DE)
(74) Vertreter: Patentanwälte Magenbauer & Kollegen Partnerschaft mbB

(56) Entgegenhaltungen:
- DE-A1- 2 654 722
- JP-A- 2010 065 833
- US-A- 3 378 993

## Beschreibung

Die Erfindung betrifft einen Kondensatabscheider zum Abscheiden von Kondensat aus strömender Druckluft, mit einer seitlich am Umfang von einer Kammerseitenwand umschlossenen, eine Längserstreckung aufweisenden Auffangkammer für abgeschiedenes Kondensat und mit einem in Abhängigkeit vom Pegelstand des abgeschiedenen Kondensates betätigbaren Kondensatablassventil, wobei die Auffangkammer einen in Gebrauchslage oben liegenden oberen Endabschnitt aufweist, dem eine Drallerzeugungseinrichtung zugeordnet ist, die in der Lage ist, zuströmende Druckluft zum Hervorrufen eines Abscheidevorganges in Rotation zu versetzen, und wobei die Auffangkammer einen in Gebrauchslage unten liegenden unteren Endabschnitt aufweist, in dem eine Betätigungseinrichtung des Kondensatablassventils und ein diese Betätigungseinrichtung umschließendes Abschirmgehäuse angeordnet sind, wobei das Abschirmgehäuse umfangsseitig eine unter Bildung eines Ringspaltes mit radialem Abstand zu der Kammerseitenwand angeordnete Gehäuseseitenwand aufweist, die von mehreren in der Umfangsrichtung der Gehäuseseitenwand beabstandet zueinander angeordneten und jeweils einen Kondensatdurchtritt ins Innere des Abschirmgehäuses ermöglichenden Durchtrittsfenstern durchbrochen ist.

Ein aus der DE 26 54 722 A1 bekannter Kondensatabscheider enthält eine eine Auffangkammer für Kondensat definierende Auffangschale mit einer im oberen Bereich angeordneten Drallerzeugungseinrichtung und einem im unteren Bereich angeordneten Kondensatablassventil. Die Drallerzeugungseinrichtung arbeitet nach dem Zentrifugalprinzip und versetzt der durch sie hindurchströmenden Druckluft einen Drall, so dass sie zu einer Rotationsbewegung veranlasst wird und in ihr enthaltene Flüssigkeitspartikel fliehkraftbedingt abgeschieden werden. Die abgeschiedenen Flüssigkeitspartikel laufen an der Innenfläche der die Auffangkammer begrenzenden Kammerseitenwand nach unten, so dass sich das abgeschiedene Kondensat im unteren Endabschnitt der Auffangkammer ansammelt. Mit Hilfe des Kondensatablassventils wird das Kondensat von Zeit zu Zeit automatisch entfernt, indem das Kondensatablassventil pegelstandsabhängig betätigt wird. Es enthält zu diesem Zweck eine Betätigungseinrichtung mit einem Schwimmer, die innerhalb eines in der Auffangkammer angeordneten Abschirmgehäuses untergebracht ist. Das Abschirmgehäuse schirmt die Betätigungseinrichtung von der darüber hinweg strömenden Druckluft ab, um Fehlfunktionen des Kondensatablassventils zu vermeiden. Das Kondensat selbst kann durch mit Sieben versehene Durchtrittsfenster einer Gehäuseseitenwand des Abschirmgehäuses hindurch ins Innere des Abschirmgehäuses eintreten. Die Siebe dienen zum Zurückhalten von Verunreinigungen.

Bei dem bekannten Kondensatabscheider ergeben sich trotz der abschirmenden Funktion des Abschirmgehäuses infolge der notwendigerweise vorhandenen Durchtrittsfenster gewisse Einflussnahmen der oberhalb des Abschirmgehäuses strömenden Druckluft auf das Betriebsverhalten des Kondensatablassventils. Es können starke Schwankungen im Flüssigkeitspegel des abgeschiedenen Kondensates auftreten, was unerwünscht häufige Betätigungen des Kondensatablassventils zur Folge haben kann.

Aus der US 3 378 993 A ist ein Kondensatabscheider der eingangs genannten Art bekannt, bei dem in einem unteren Endabschnitt einer Auffangkammer ein Kondensatablassventil angeordnet ist, das von einem Gehäuse umgeben ist, das ein Sieb aufweist. Oberhalb dieses Gehäuses befindet sich ein kugelkappenartig gestaltetes Blendenelement mit Aussparungen am nach unten weisenden Rand.

Aus der EP 1 586 363 B1 ist ein Kondensatabscheider bekannt, der in Druckluftnetzen zur sogenannten Aufbereitung der von einer Druckluftquelle zu einem oder mehreren Verbrauchern strömenden Druckluft eingesetzt wird. Hauptanwendungszweck dieses Kondensatabscheiders ist das Abscheiden flüssiger Partikel aus der Druckluft. Darüber hinaus erfüllt der bekannte Kondensatabscheider auch noch eine Filterungsfunktion, indem feste Verunreinigungen aus der strömenden Druckluft herausgefiltert werden. Dies zeigt, dass Kondensatabscheider auch mit anderen Luftaufbereitungsfunktionen kombinierbar sind.

Der aus der EP 1 586 363 B1 bekannte Kondensatabscheider weist in seiner Auffangkammer zwischen der oben angeordneten Drallerzeugungseinrichtung und dem zum Auffangen des abgeschiedenen Kondensates dienenden unteren Endabschnitt der Auffangkammer einen Trennteller auf, der den Zweck hat, die durch die Drallerzeugungseinrichtung hindurchströmende Druckluft so weit wie möglich an einem Überströmen in den unteren Bereich des abgeschiedenen Kondensates zu hindern. Da der Trennteller jedoch zur Gewährleistung eines Durchtritts des abgeschiedenen Kondensates über schlitzartige Kondensatdurchlassöffnungen verfügt, ist eine Abschirmung des abgeschiedenen Kondensates von der Druckluftströmung nur bedingt möglich.

Der Erfindung liegt die Aufgabe zugrunde, Maßnahmen zu treffen, die ein verbessertes Betriebsverhalten des pegelstandsabhängig arbeitenden Kondensatablassventils gewährleisten.

Zur Lösung dieser Aufgabe ist in Verbindung mit den eingangs genannten Merkmalen vorgesehen, dass das Abschirmgehäuse an der der Kammerseitenwand zugewandten Außenfläche seiner Gehäuseseitenwand mehrere in der Umfangsrichtung der Gehäuseseitenwand beabstandet zueinander angeordnete Strömungsstaurippen aufweist, die sich jeweils in der Längsrichtung der Auffangkammer erstrecken und die jeweils in dem Ringspalt in Richtung zur Kammerseitenwand von der Gehäuseseitenwand des Abschirmgehäuses wegragen.

Wie sich gezeigt hat, bewirken die Strömungsstaurippen in der vorzugsweise einen kreisförmigen Querschnitt aufweisenden Auffangkammer ein lokales Aufstauen der in den Ringspalt zwischen dem Abschirmgehäuse und der Kammerseitenwand eintretenden Druckluftströmung. Die Druckluftströmung wird an einem uneingeschränkten Herumströmen um das Abschirmgehäuse gehindert und stark beruhigt. Dies wirkt sich gleichfalls beruhigend auf das abgeschiedene und sich ansammelnde Kondensat aus, dessen beim Stand der Technik oftmals zu beobachtenden zyklischen Schaukelbewegungen nunmehr auf ein Minimum reduziert sind. Die Folge hiervon ist ein sehr störungsarmer Betrieb des pegelstandsabhängig betätigten Kondensatablassventils. Die Betätigungszyklen dieses Kondensatablassventils orientieren sich fortan nur noch am tatsächlichen Pegelstand und nicht an zeitweiligen Pegelstandsspitzen, die durch ein unruhiges Kondensat hervorgerufen werden.

Vorteilhafte Weiterbildungen der Erfindung gehen aus den Unteransprüchen hervor.

Mehrere der Strömungsstaurippen sind zweckmäßigerweise in denjenigen Bereichen angeordnet, die sich zwischen jeweils in Umfangsrichtung der Gehäuseseitenwand aufeinanderfolgenden Durchtrittsfenstern befinden. Besonders zweckmäßig ist es, wenn zwischen sämtlichen zueinander benachbarten Durchtrittsfenstern mindestens eine und genau eine Strömungsstaurippe angeordnet ist.

Die Gehäuseseitenwand verfügt zweckmäßigerweise zwischen in Umfangsrichtung jeweils benachbarten Durchtrittsfenstern über jeweils einen geschlossenen Wandabschnitt. Es ist zweckmäßig, wenn die Strömungsstaurippen an diesen geschlossenen Wandabschnitten angeordnet und insbesondere einstückig angeformt sind.

Als vorteilhaft wird es angesehen, wenn mindestens eine, mehrere oder sämtliche Strömungsstaurippen in bezüglich der Mittellängsachse des Abschirmgehäuses radialer Richtung von der Gehäuseseitenwand wegragen. Allerdings ist ohne weiteres auch eine Schrägstellung möglich, was insbesondere das Entformen bei einer eventuellen Spritzgießherstellung des Abschirmgehäuses begünstigt.

Das Abschirmgehäuse besteht vorzugsweise aus einem Kunststoffmaterial. Die Strömungsstaurippen sind bevorzugt einstückig mit der Gehäuseseitenwand des Abschirmgehäuses verbunden.

Die in der Querschnittsrichtung der Auffangkammer gemessene Höhe der einzelnen Strömungsstaurippen kann so bemessen sein, dass eine, mehrere oder sämtliche Strömungsstaurippen mit Abstand vor der gegenüberliegenden Innenfläche der Kammerseitenwand enden. Bereits hierdurch wird ein effektiver Luftstaueffekt bewirkt. Als besonders vorteilhaft wird es jedoch angesehen, die Höhe der Strömungsstaurippen so zu wählen, dass sie an der Innenfläche der Kammerseitenwand anliegen. Mit einer derart anliegenden Konstellation ergibt sich eine besonders strenge Unterteilung des Ringspaltes in mehrere in der Umfangsrichtung des Abschirmgehäuses aufeinanderfolgende Ringspaltsegmente.

Wenn die Strömungsstaurippen innen an der Kammerseitenwand anliegen, ergibt sich auch eine abstützende Wirkung der Kammerseitenwand in Bezug auf das Abschirmgehäuse. Dementsprechend sind an die sonstigen Befestigungsmaßnahmen zur Fixierung des Abschirmgehäuses keine besonders hohen Ansprüche zu stellen, was die Herstellungskosten minimiert.

Das Abschirmgehäuse weist an der der Drallerzeugungseinrichtung zugewandten Oberseite zweckmäßigerweise eine geschlossene Gehäusedeckenwand auf, die zweckmäßigerweise scheibenförmig gestaltet ist und sich in einer bezüglich der Längsachse der Auffangkammer radialen Ebene erstreckt. Diese Gehäusedeckenwand ist insbesondere einstückig mit der Gehäuseseitenwand verbunden.

Die Strömungsstaurippen sind zweckmäßigerweise so angeordnet, dass sie sich in der Längsrichtung der Auffangkammer nach oben bis hin in den Bereich der Gehäusedeckenwand erstrecken. Besonders zweckmäßig ist es hierbei, wenn die Strömungsstaurippen so ausgebildet sind, dass sie an der Oberseite mit der nach oben weisenden äußeren Stirnfläche der Gehäusedeckenwand bündig abschließen.

Als zweckmäßig hat es sich erwiesen, wenn die Strömungsstaurippen im Bereich der Gehäusedeckenwand, also an ihrer nach oben weisenden Stirnseite, mit einem abgeschrägten Verlauf enden.

Ein noch intensiverer Beruhigungseinfluss wird auf die Druckluftströmung ausgeübt, wenn das Abschirmgehäuse an der Außenseite seiner Gehäuseseitenwand zusätzlich zu den sich in der Längsrichtung der Auffangkammer erstreckenden Strömungsstaurippen auch noch mehrere sich in der Umfangsrichtung der Auffangkammer bzw. der Gehäuseseitenwand des Abschirmgehäuses erstreckende und in dieser Umfangsrichtung mit Abstand zueinander angeordnete Trennflügel aufweist. Diese Trennflügel entfalten einen abschottenden Effekt, indem sie den oberhalb des Abschirmgehäuses liegenden Abschnitt der Auffangkammer partiell von dem sich radial zwischen dem Abschirmgehäuse und der Kammerseitenwand erstreckenden Radialspalt abtrennen. Die offenen, von den Trennflügeln nicht abgedeckten Bereiche, durch die hindurch die Druckluft in den Ringspalt eintreten kann, sind somit erheblich reduziert. Darüber hinaus stellen die Trennflügel auch ein Strömungshindernis für die aus dem Ringspalt wieder austretende Druckluft dar, was zur Folge hat, dass die Tendenz eines Mitreißens und Entfernens von Kondensat aus dem Ringspalt durch die Druckluft erheblich verringert wird. Dies wirkt sich sehr positiv auf die Abscheidequalität des Kondensatabscheiders aus, weil die Tendenz zur nachträglichen Wiederanreicherung der bereits gereinigten Druckluft mit Flüssigkeitspartikeln nurmehr äußerst gering ist.

Zweckmäßigerweise liegen mehrere und insbesondere sämtliche Trennflügel bezogen auf die Längsrichtung des Abschirmgehäuses auf gleicher Höhe. Sie stellen insbesondere einen Trennflügelkranz dar, der sich in dem Ringspalt rings um das Abschirmgehäuse herum erstreckt.

Besonders zweckmäßig ist eine Anordnung der Trennflügel an dem der Drallerzeugungseinrichtung zugewandten oberen Endbereich des Abschirmgehäuses, wobei ein geringfügiger axialer Abstand zur oberen axialen Stirnfläche des Abschirmgehäuses bevorzugt wird.

Jeder Trennflügel hat zwei in einander entgegengesetzte Umfangsrichtungen der Gehäuseseitenwand weisende Endabschnitte, nämlich einen hinteren Endabschnitt und einen vorderen Endabschnitt. Es ist zweckmäßig, die Trennflügel so anzuordnen, dass einige und vorzugsweise sämtliche Trennflügel mit ihrem hinteren Endabschnitt an einer der beiden in der Umfangsrichtung der Gehäuseseitenwand orientierten Seitenflächen jeweils einer Strömungsstaurippe anliegen. Die Seitenflächen der Strömungsstaurippen, an denen jeweils ein Trennflügel anliegt, sind insbesondere in der gleichen Umfangsrichtung der Gehäuseseitenwand orientiert. Die gegenseitige Anlage zwischen einem Trennflügel und einer Strömungsstaurippe kann insbesondere durch miteinander einstückige Ausgestaltung realisiert sein.

Für die Gestaltung des Abschirmgehäuses empfiehlt sich eine becherförmige Formgebung mit im montierten Zustand nach unten orientierter Becheröffnung. Zweckmäßigerweise ist das Abschirmgehäuse im Bereich der Becheröffnung innen an der Wandung der Auffangkammer fixiert, insbesondere in lösbarer Weise. Zur Fixierung kann insbesondere eine Bajonettverbindungseinrichtung vorgesehen sein.

Eine vorteilhafte Ausgestaltung des Abschirmgehäuses besteht darin, die Durchtrittsfenster jeweils mit einer Siebstruktur zu versehen, die flüssigkeitsdurchlässig ausgebildet ist. Diese Siebstruktur bewirkt zum einen ein Zurückhalten von Verunreinigungen aus dem Innenraum des Abschirmgehäuses, in dem sich die empfindliche Betätigungseinrichtung für das Kondensatablassventil befindet. Zum anderen kann die Siebstruktur in vorteilhafter Weise zu einer weiteren Beruhigung des abgeschiedenen Kondensates beitragen.

Eine der Kernkomponenten der Betätigungseinrichtung besteht zweckmäßigerweise aus einem Schwimmer, der in Höhenrichtung beweglich im Innern des Abschirmgehäuses angeordnet ist und dessen Höhenposition vom aktuellen Pegelstand des abgeschiedenen Kondensats abhängt. Der Öffnungsvorgang des Kondensatablassventils wird ausgelöst, wenn der Schwimmer eine vorbestimmte Schwimmhöhe erreicht hat.

Ein nicht unwesentlicher Vorteil des erfindungsgemäßen Kondensatabscheiders besteht auch darin, dass bei Bedarf auf zusätzliche Strömungsberuhigungsmaßnahmen zwischen dem Abschirmgehäuse und der mit Abstand darüber angeordneten Drallerzeugungseinrichtung verzichtet werden kann. Es erübrigt sich dort insbesondere die Installation eines zusätzlichen Trenntellers, der axial übereinander angeordnete Bereiche der Auffangkammer voneinander abtrennt. Auf diese Weise lässt sich der Kondensatabscheider kostengünstig herstellen und montieren.

Nachfolgend wird die Erfindung anhand der beiliegenden Zeichnung näher erläutert. In dieser zeigen:
- Figur 1: einen Längsschnitt durch eine bevorzugte Ausführungsform des erfindungsgemäßen Kondensatabscheiders gemäß Schnittlinie I-I aus Figur 3,
- Figur 2: einen weiteren Längsschnitt des Kondensatabscheiders, wobei die im Innern des Kondensatabscheiders angeordneten Komponenten rechts von der Mittellängsachse ungeschnitten dargestellt sind,
- Figur 3: einen Querschnitt durch den Kondensatabscheider gemäß Schnittlinie III-III aus Figuren 1 und 2, und
- Figur 4: eine perspektivische Einzeldarstellung der beim Ausführungsbeispiel realisierten bevorzugten Ausführungsform eines Abschirmgehäuses.

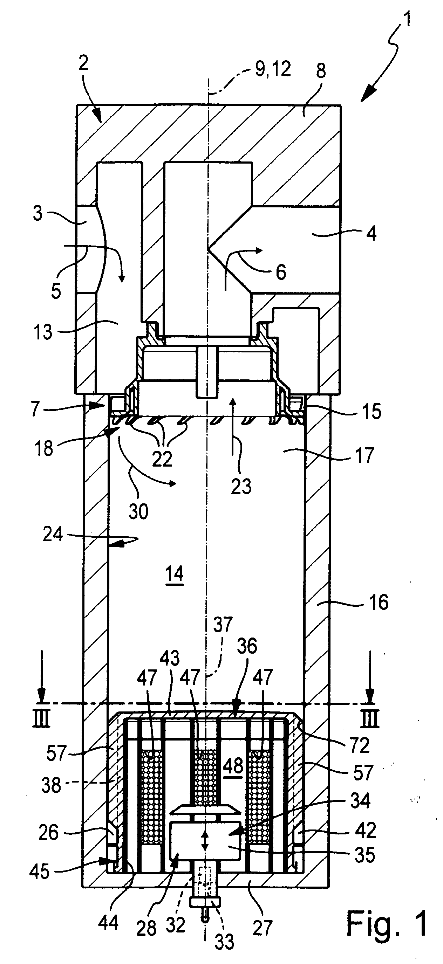

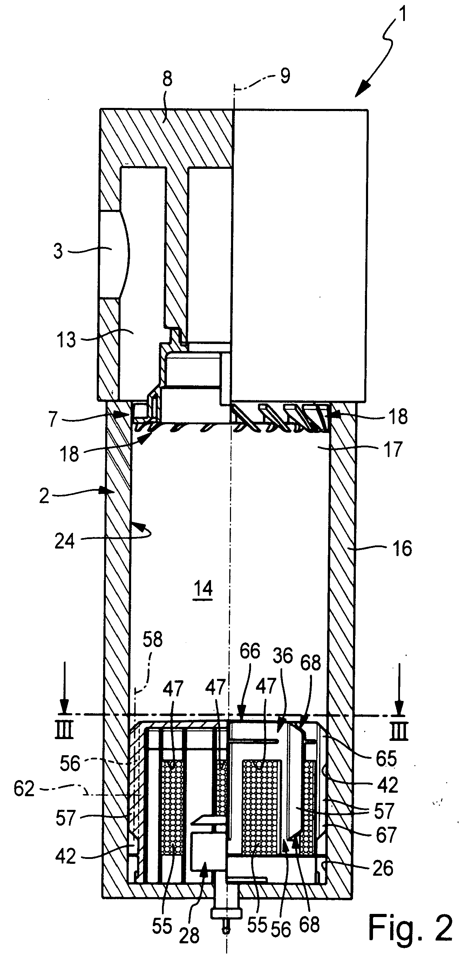

Die Figuren 1 und 2 zeigen einen zur Aufbereitung von Druckluft eingesetzten Kondensatabscheider 1, der über ein Hauptgehäuse 2 verfügt, an dem in von außen her zugänglicher Weise ein Lufteinlass 3 und ein Luftauslass 4 ausgebildet sind. Im Betrieb des Kondensatabscheiders 1 strömt über den Lufteinlass 3 mit Kondensat angereicherte Druckluft gemäß Pfeil 5 in das Hauptgehäuse 2 ein, die nach Befreiung von dem Kondensat gemäß Pfeil 6 durch den Luftauslass 4 hindurch wieder aus dem Hauptgehäuse 2 austritt.

Beim Hindurchströmen durch das Hauptgehäuse 2 wird das in der Druckluft enthaltene Kondensat mittels einer im Strömungsweg der Druckluft platzierten Drallerzeugungseinrichtung 7 abgeschieden.

Mit seinem Lufteinlass 3 und Luftauslass 4 kann das Hauptgehäuse 2 in den Verlauf einer nicht abgebildeten Druckluftleitung eingeschaltet werden, die beispielsweise dazu dient, von einem Drucklufterzeuger bereitgestellte Druckluft einem oder mehreren an den Luftauslass 4 angeschlossenen Verbrauchern zur Verfügung zu stellen.

Der Kondensatabscheider 1 kann ein Druckluftaufbereitungsmodul sein, das mit weiteren Druckluftaufbereitungsmodulen zu einer Aufbereitungseinheit zusammengefasst werden kann. Mehrere Druckluftaufbereitungsmodule können hierbei in Reihe geschaltet sein. Bauarten weiterer Druckluftaufbereitungsmodule sind beispielsweise Druckluftöler, Druckluftfilter oder Druckregelventil. Druckluftaufbereitungsmodule werden häufig auch als "Wartungsmodule" oder "Wartungsgeräte" bezeichnet. Das Hauptgehäuse 2 hat zweckmäßigerweise einen Gehäusekopf 8, in dem vorzugsweise sowohl der Lufteinlass 3 als auch der Luftauslass 4 ausgebildet sind. Lufteinlass 3 und Luftauslass 4 befinden sich zweckmäßigerweise an einander entgegengesetzt orientierten Außenflächen des zum Beispiel würfelförmigen Gehäusekopfes 8. Das Hauptgehäuse 2 enthält zweckmäßigerweise auch noch eine bevorzugt becherähnlich ausgebildete Auffangschale 16, die mit ihrer offenen Seite voraus insbesondere lösbar an eine Unterseite des Gehäusekopfes 8 angebaut ist.

Der Kondensatabscheider 1 hat insbesondere eine Längsgestalt mit einer Längsachse 9. In der üblichen Gebrauchslage des Kondensatabscheiders 1 ist die Längsachse 9 vertikal orientiert. Die Auffangschale 16 liegt hierbei unterhalb des Gehäusekopfes 8. Soweit keine anderen Angaben gemacht werden, beziehen sich die weiteren Ausführungen auf diese Gebrauchslage mit vertikaler Längsachse 9. Angaben wie "oben", "unten" usw. beziehen sich auf diese Gebrauchslage.

Im Innern des Hauptgehäuses 2 und dabei insbesondere im Innern des Gehäusekopfes 8 befindet sich eine erste Luftkammer 13. Sie ist mit dem Lufteinlass 3 verbunden. Des Weiteren befindet sich im Innern des Hauptgehäuses 2 unterhalb der ersten Luftkammer 13 eine zweite Luftkammer, die im Folgenden als Auffangkammer 14 bezeichnet sei. Diese Auffangkammer 14 steht ständig mit dem Luftauslass 4 in Fluidverbindung.

Die Auffangkammer 14 hat eine Längserstreckung mit einer Längsachse 12, die mit der Längsachse 9 des Kondensatabscheiders 1 zweckmäßigerweise zusammenfällt. Vorzugsweise ist die Auffangkammer 14 in ihrer Gesamtheit im Innern der Auffangschale 16 ausgebildet.

Die Auffangkammer 14 hat einen in Achsrichtung der Längsachse 12 orientierten oberen Endabschnitt 17. Diesem oberen Endabschnitt 17 ist die Drallerzeugungseinrichtung 7 zugeordnet. Genauer gesagt befindet sich die Drallerzeugungseinrichtung 7 axial zwischen der ersten Luftkammer 13 und der darunter liegenden Auffangkammer 14, wobei sie einen ringförmigen, zu der Längsachse 12 konzentrischen Luftdurchtrittsspalt 15 aufweist sowie einen in dem Luftdurchtrittsspalt 15 platzierten Leitschaufelkranz 18. Der Leitschaufelkranz 18 verfügt über eine Vielzahl von in der Spaltumfangsrichtung des Luftdurchtrittsspaltes 15 verteilt angeordneten Leitschaufeln 22, die bezüglich der Längsachse 12 eine gewisse Schrägstellung aufweisen und zwischen sich jeweils einen Luftdurchtrittskanal definieren.

Im Betrieb des Kondensatabscheiders 1 gelangt die über den Lufteinlass 3 eingetretene Druckluft zunächst in die erste Luftkammer 13, dann durch den Leitschaufelkranz 18 hindurch in die Auffangkammer 14 und von dort gemäß Pfeil 23 zum Luftauslass 4.

Der in dem Luftdurchtrittsspalt 15 angeordnete Leitschaufelkranz 18 wird von der über den Lufteinlass 3 zuströmenden Druckluft im Wesentlichen axial, also parallel zu der Längsachse 12, angeströmt. Beim Hindurchtreten durch den Leitschaufelkranz 18 wird die Luftströmung durch Interaktion mit den Leitschaufeln 22 umgelenkt, so dass sie gemäß Strömungspfeil 30 einen Drall und mithin eine Richtungskomponente quer zu der Längsachse 12 erhält, so dass sie um die Längsachse 12 herum in Rotation versetzt wird. Die hierbei auf das in der Druckluft enthaltene Kondensat wirkenden Fliehkräfte befördern das Kondensat nach radial außen, so dass es sich an der Innenfläche 24 einer die Auffangkammer 14 umfangsseitig begrenzenden Kammerseitenwand 25 niederschlägt und daran nach unten bis in einen unteren Endabschnitt 26 der Auffangkammer 14 abfließt. Das abgeschiedene Kondensat sammelt sich folglich im unteren Endabschnitt 26 der Auffangkammer 14 an, wobei mit zunehmender Menge der abgeschiedenen Flüssigkeit der Flüssigkeitspegel des Kondensats ansteigt.

Die Kammerseitenwand 25 ist zweckmäßigerweise von der Seitenwand der Auffangschale 16 gebildet. Eine sich axial unten an die Kammerseitenwand 25 anschließende Kammerbodenwand 27 ist dabei zweckmäßigerweise ebenfalls ein Bestandteil der Auffangschale 16.

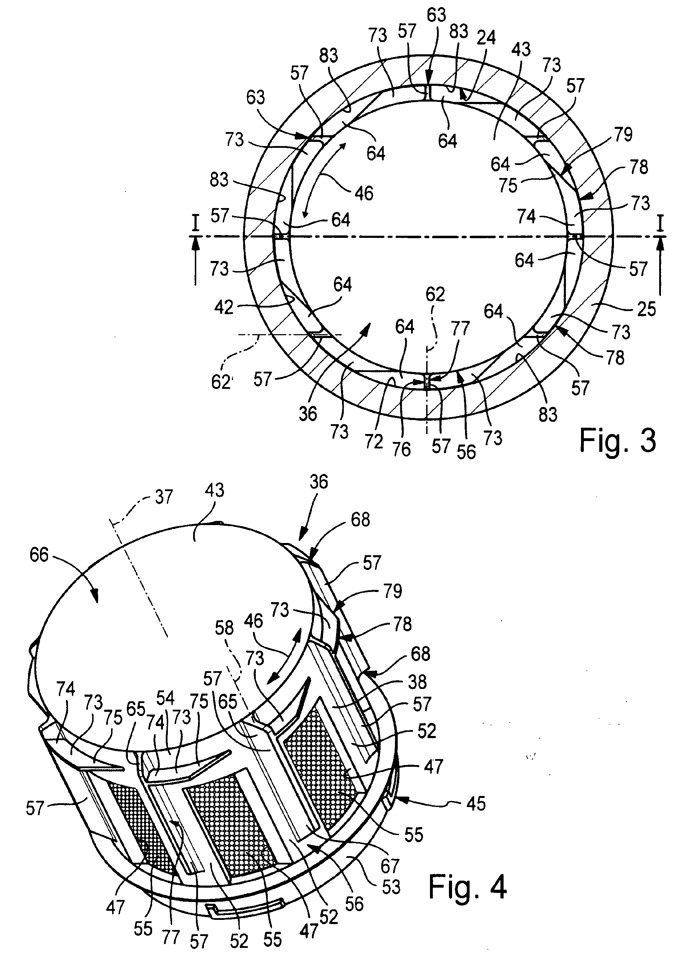

Um die Rotationsströmung der Druckluft in der Auffangkammer 14 zu begünstigen, hat die Auffangkammer 14 zweckmäßigerweise einen kreisförmigen Querschnitt. Dies ist in Figur 3 gut zu erkennen.

Exemplarisch ist die Innenfläche 24 der Auffangkammer 14 zylindrisch gestaltet. Es ist allerdings ebenso eine andere Formgebung möglich und hierbei insbesondere eine sich nach unten hin verjüngende Form.

Um die Auffangkammer 14 von Zeit zu Zeit vom sich ansammelnden Kondensat zu entleeren, ist der Kondensatabscheider 1 mit einem in Abhängigkeit vom Pegelstand des abgeschiedenen Kondensates betätigbaren Kondensatablassventil 28 ausgestattet. Dieses befindet sich insbesondere am unteren Endbereich der Auffangschale 16.

Das in der Zeichnung nur schematisch angedeutete Kondensatablassventil 28 enthält ein bewegliches Ventilglied 32, das normalerweise einen Ablasskanal 33 verschlossen hält. Der Ablasskanal durchsetzt die Wandung der Auffangschale 16 und ermöglicht einen Fluidaustritt des sich im unteren Endabschnitt 26 der Auffangkammer 14 ansammelnden Kondensates.

Das Kondensatablassventil 28 verfügt über eine die genannte pegelstandsabhängige Betätigung ermöglichende Betätigungseinrichtung 34. Diese ist im unteren Endabschnitt 26 der Auffangkammer 14 platziert. Bevorzugt enthält sie unter anderem einen in Achsrichtung der Längsachse 12 beweglichen Schwimmer 35, dessen Höhenposition vom Pegelstand des in der Auffangkammer 14 befindlichen Kondensats abhängt. Der Schwimmer 35 ist in nicht weiter abgebildeter Weise mit dem Ventilglied 32 antriebsmäßig verbunden und veranlasst ein Umschalten des Ventilgliedes 32 aus einer den Ablasskanal 33 verschließenden Schließstellung in eine den Ablasskanal 33 freigebende Offenstellung, wenn er auf ein gewisses Höhenniveau aufgeschwommen ist.

In dem unteren Endabschnitt 26 der Auffangkammer 14 befindet sich ein die Betätigungseinrichtung 34 umschließendes Abschirmgehäuse 36. Dieses Abschirmgehäuse 36 ist in Figur 4 nochmals separat abgebildet. Das Abschirmgehäuse 36 hat eine zentral verlaufende Mittellängsachse 37, die mit der sich querschnittsmittig längs der Auffangkammer 14 erstreckenden Längsachse 12 der Auffangkammer 14 zusammenfällt.

Das Abschirmgehäuse 36 hat umfangsseitig eine bevorzugt ring- oder hülsenförmig gestaltete Gehäuseseitenwand 38, die koaxial zu der Mittellängsachse 37 angeordnet ist. Der Außendurchmesser dieser Gehäuseseitenwand 38 ist geringer als der Innendurchmesser der Auffangkammer 14 im Bereich des Abschirmgehäuses 36, so dass radial zwischen dem Abschirmgehäuse 36 und der Kammerseitenwand 25 ein Ringspalt 42 ausgebildet ist.

An der der Drallerzeugungseinrichtung 7 zugewandten Oberseite weist das Abschirmgehäuse 36 eine bevorzugt geschlossene Gehäusedeckenwand 43 auf. Diese ist bevorzugt scheibenförmig gestaltet und erstreckt sich zweckmäßigerweise in einer zur Längsachse 12 der Auffangkammer 14 radialen Ebene. Die Gehäuseseitenwand 38 schließt sich am Außenumfang der Gehäusedeckenwand 43 unmittelbar und insbesondere einstückig an die Gehäusedeckenwand 43 an.

An der der Gehäusedeckenwand 43 entgegengesetzten Axialseite, die im Einbauzustand die Unterseite des Abschirmgehäuses 36 darstellt, ist das Abschirmgehäuse 36 zweckmäßigerweise offen. Auf diese Weise hat das Abschirmgehäuse 36 vorzugsweise eine becherförmige Gestalt. Es ist derart in der Auffangkammer 14 platziert, dass seine der Gehäusedeckenwand 43 entgegengesetzte Gehäuseöffnung 44 der Kammerbodenwand 27 zugewandt ist.

Vorzugsweise ist das Abschirmgehäuse 36 lösbar im Innern der Auffangkammer 14 befestigt. Die Befestigung erfolgt insbesondere im Bereich der Gehäuseöffnung 44. Exemplarisch ist eine Bajonettverbindungseinrichtung 45 zur lösbaren Befestigung vorgesehen, deren Komponenten teils am Abschirmgehäuse 36 und teils an der Auffangschale 16 ausgebildet sind.

Die Gehäuseseitenwand 38 des Abschirmgehäuses 36 ist von mehreren jeweils einen Kondensatdurchtritt durch die Gehäuseseitenwand 38 hindurch ermöglichenden Durchtrittsfenstern 47 durchbrochen. Die Durchtrittsfenster 47 ermöglichen jeweils ein Hindurchströmen des Kondensates zwischen dem Ringspalt 42 und dem im Folgenden als Innenraum 48 bezeichneten Innern des Abschirmgehäuses 36. Auf diese Weise ergibt sich außerhalb und innerhalb des Abschirmgehäuses 36 zumindest ab einer bestimmten Mindestfüllhöhe der gleiche Kondensatpegelstand.

Die mehreren Durchtrittsfenster 47 sind in der durch einen Doppelpfeil 46 illustrierten Umfangsrichtung der Gehäuseseitenwand 38 mit Abstand zueinander verteilt angeordnet. Somit verfügt das Abschirmgehäuse 36 in seiner Gehäuseseitenwand 38 über eine Fensteranordnung bestehend aus einer Vielzahl von in der Umfangsrichtung 46 mit Abstand zueinander angeordneten Durchtrittsfenstern 47.

Jedes der Durchtrittsfenster 47 hat zweckmäßigerweise eine Längsgestalt und ist insbesondere rechteckig konturiert.

Zwischen in der Umfangsrichtung 46 jeweils unmittelbar aufeinanderfolgenden Durchtrittsfenstern 47 befindet sich jeweils ein geschlossener Wandabschnitt 52 der Gehäuseseitenwand 38. Dieser geschlossene Wandabschnitt 52 ist insbesondere streifenförmig oder stegförmig ausgebildet.

Aufgrund der vorhandenen Durchtrittsfenster 47 lässt sich die Struktur der Gehäuseseitenwand 38 auch dahingehend beschreiben, dass sie einen der Gehäuseöffnung 44 zugeordneten unteren Ringabschnitt 53 und einen der Gehäusedeckenwand 43 zugeordneten oberen Ringabschnitt 54 aufweist, wobei sich zwischen diesen beiden axial beabstandet zueinander angeordneten Ringabschnitten 53, 54 die in der Umfangsrichtung 46 zueinander beabstandeten geschlossenen Wandabschnitte 52 erstrecken.

Jedes der Durchtrittsfenster 47 ist zweckmäßigerweise durch eine Siebstruktur 55 flüssigkeitsdurchlässig verschlossen. Die Siebstruktur 55 füllt das jeweilige Durchtrittsfenster 47 vollständig aus und verfügt über eine Vielzahl von Löchern kleinen Querschnittes, die einen Fluiddurchtritt ermöglichen, zugleich aber gröbere Verunreinigungen zurückhalten. Die Siebstruktur erfüllt somit eine Filterfunktion und hält in der Druckluft mitgeführte Verunreinigungen davon ab, in den Innenraum 48 und dort in den Einflussbereich des Kondensatablassventils 28 zu gelangen.

Nebenbei erfüllt die Siebstruktur 55 auch noch eine vorteilhafte Beruhigungsfunktion in Bezug auf das abgeschiedene Kondensat, weil sie für die in den Ringspalt 42 eintretende Druckluft ein Strömungshindernis darstellt.

Einen wesentlichen Beitrag zur Beruhigung der Strömung leisten an der Außenfläche 56 der Gehäuseseitenwand 38 der Abschirmgehäuses 36 angeordnete Rippenelemente, die aufgrund ihrer Funktion als Strömungsstaurippen 57 bezeichnet werden. Mehrere solcher Strömungsstaurippen 57 sind in der Umfangsrichtung 46 mit Abstand zueinander radial außen an der Gehäuseseitenwand 38 angeordnet.

Jede der Strömungsstaurippen 57 hat eine Rippen-Längsachse 58 und eine Rippen-Hochachse 62. Außerdem hat jede Strömungsstaurippe 57 rechtwinkelig zur Rippen-Längsachse 58 und zur Rippen-Hochachse 62 eine gewisse Dicke.

Jede Strömungsstaurippe 57 ist derart an der Außenfläche 56 angeordnet, dass sie sich in der Längsrichtung der Auffangkammer 14 erstreckt. Hierzu ist insbesondere die Rippen-Längsachse 58 parallel zur Längsachse 12 der Auffangkammer 14 ausgerichtet. Bezogen auf das Abschirmgehäuse 36 erstreckt sich die Rippen-Längsachse 58 vorzugsweise parallel zu dessen Mittellängsachse 37.

Jede Strömungsstaurippe 57 ragt in dem Ringspalt 42 in der Richtung zur Kammerseitenwand 25 von der Gehäuseseitenwand 38 des Abschirmgehäuses 36 weg. Die Rippen-Hochachse 62 verläuft quer zu der Längsachse 12 und der Mittellängsachse 37. Vorzugsweise hat jede Strömungsstaurippe 57 eine derartige Höhe, dass sie sich ausgehend vom Abschirmgehäuse 36 bis hin zur Kammerseitenwand 25 erstreckt und dabei mit ihrem vom Abschirmgehäuse 36 quer zu der Mittellängsachse 37 wegweisenden Längsrand 63 vorzugsweise an der zugewandten Innenfläche 25 der Kammerseitenwand 25 anliegt. Durch eine solche Anlage ergibt sich eine vorteilhafte Querabstützung des Abschirmgehäuses 36 bezüglich der Kammerseitenwand 25.

Herstellungstechnisch betrachtet ist es von Vorteil, wenn die Strömungsstaurippen 57 jeweils einstückig mit der Gehäuseseitenwand 38 des Abschirmgehäuses 36 ausgebildet sind.

Aufgrund der geschilderten Konstellation ist der Ringspalt 42 durch die in der Umfangsrichtung 46 mit Abstand zueinander verteilt angeordneten Strömungsstaurippen 57 in einzelne Ringspaltsegmente 64 unterteilt.

Abweichend vom Ausführungsbeispiel besteht allerdings auch die Möglichkeit, die Rippenhöhe der Strömungsstaurippen 57 so zu wählen, dass die Strömungsstaurippen 57 mit ihrem Längsrand 63 beabstandet zur Innenfläche 24 enden. Es besteht außerdem die Möglichkeit, eine oder mehrere der Strömungsstaurippen 57 an der Innenfläche 24 anliegend auszubilden und darüber hinaus gleichzeitig mindestens eine und zweckmäßigerweise mehrere weitere Strömungsstaurippen 57 mit Abstand vor der Innenfläche 24 enden zu lassen.

Insbesondere aus Figur 3 ist ersichtlich, dass die Strömungsstaurippen 57 derart ausgerichtet sein können, dass ihre Rippen-Hochachse 62 jeweils exakt radial bezüglich der Mittellängsachse 37 des Abschirmgehäuses 36 ausgerichtet ist. Für einige der Strömungsstaurippen 57 des Ausführungsbeispiels trifft dies zu.

Die Figur 3 verdeutlicht aber auch, dass die Strömungsstaurippen 57 mit bezüglich der radialen Richtung des Abschirmgehäuses 36 schrägem Verlauf ihrer Rippen-Hochachse 62 angeordnet sein können. Beim Ausführungsbeispiel trifft dies auf mehrere der Strömungsstaurippen 57 zu. Schräg angestellte Strömungsstaurippen 57 begünstigen insbesondere den Entformungsvorgang bei einer eventuellen Spritzgießherstellung des Abschirmgehäuses 36.

Es ist von Vorteil, wenn die vorhandenen Strömungsstaurippen 57 in der Umfangsrichtung 46 abwechselnd mit radialer Rippen-Hochachse 62 und bezüglich der radialen Richtung schräger Rippen-Hochachse 62 ausgerichtet sind.

Für die Platzierung der Strömungsstaurippen 57 empfehlen sich die zwischen den einzelnen Durchtrittsfenstern 47 angeordneten geschlossenen Wandabschnitte 52 der Gehäuseseitenwand 38. Vorzugsweise ist an jedem dieser geschlossenen Wandabschnitte 52 und somit in jedem zwischen zwei in Umfangsrichtung 46 der Gehäuseseitenwand 38 aufeinanderfolgenden Durchtrittsfenstern 47 liegenden Bereich mindestens eine und vorzugsweise genau eine Strömungsstaurippe 57 angeordnet. Dies trifft für das Ausführungsbeispiel zu. Abweichend von diesem Ausführungsbeispiel können allerdings auch nur einige der geschlossenen Wandabschnitte 52 mit einer Strömungsstaurippe 57 ausgestattet sein. Beispielsweise könnte jeder zweite der in der Umfangsrichtung 46 aufeinanderfolgenden geschlossenen Wandabschnitte 52 eine Strömungsstaurippe 57 tragen.

Was die Anordnung der Strömungsstaurippen 57 bezogen auf die Achsrichtung der Mittellängsachse 37 anbelangt, ist es von Vorteil, wenn sich die Strömungsstaurippen 57 an ihrem der Gehäusedeckenwand 43 zugeordneten oberen Endabschnitt 65 bis hin in den Bereich der Gehäusedeckenwand 43 erstrecken. Bevorzugt schließen die Strömungsstaurippen 57 mit ihrem oberen Endabschnitt 65 bündig mit der nach oben zur Drallerzeugungseinrichtung 7 weisenden äußeren Stirnfläche 66 der Gehäusedeckenwand 43 ab.

Allerdings hat es sich als vorteilhaft erwiesen, wenn die Strömungsstaurippen 57 an ihrem oberen Endabschnitt 65 abgeschrägt sind. Gleiches gilt im Übrigen zweckmäßigerweise auch für jeden in Achsrichtung der Mittellängsachse 37 orientierten unteren Endabschnitt 67 der Strömungsstaurippen 57.

Bedingt durch den endseitigen schrägen Verlauf kann jede Strömungsstaurippe 57 zwei schräge Stirnflächen 68 aufweisen, die ausgehend von der Gehäuseseitenwand 38 sich nach radial außen und zugleich schräg in Richtung zum jeweils anderen Endabschnitt 67 oder 68 hin erstrecken.

Der Ringspalt 42 hat eine nach oben in Richtung zur Drallerzeugungseinrichtung 7 orientierte Eintrittsöffnung 72. Durch diese Eintrittsöffnung 72 hindurch kann das an der Innenfläche 24 herabfließende Kondensat in den Ringspalt 42 eintreten und sich im Bodenbereich des unteren Endabschnittes 26 der Auffangkammer 14 ansammeln. Auch die zwischen dem Lufteinlass 3 und dem Luftauslass 4 überströmende und dabei durch die Auffangkammer 14 hindurchströmende Druckluft kann allerdings durch die Eintrittsöffnung 72 hindurch in den Ringspalt 42 gelangen. Hier tritt nun der besondere Vorteil der Strömungsstaurippen 57 zutage, die als Sperrelemente für die in der Regel schräg ankommende Druckluft wirken und verhindern, dass sich um das Abschirmgehäuse 36 herum eine rotative Druckluftströmung ungehindert ausbilden kann, die sich negativ auf das Verhalten des abgeschiedenen Kondensates auswirken würde. Man könnte die Strömungsstaurippen 57 auch als Strömungsstopprippen bezeichnen. Druckluft, die in den zwischen zwei aufeinanderfolgenden Strömungsstaurippen 57 liegenden Bereich eintritt, kann folglich nicht oder nur zu einem geringen Anteil in das benachbarte Ringspaltsegment 64 übertreten.

Besonders effektiv sind die Strömungsstaurippen 57 in Kombination mit an der Außenfläche 56 der Gehäuseseitenwand 38 zusätzlich angeordneten Trennflügeln 73. Mehrere solcher Trennflügel 73 sind zweckmäßigerweise in der Umfangsrichtung 46 mit Abstand zueinander verteilt außen an der Gehäuseseitenwand 38 angeordnet, wobei sie eine in der Umfangsrichtung 46 orientierte Längserstreckung haben und sich mithin jeweils ein Stückweit in der Umfangsrichtung 46 entlang der Gehäuseseitenwand 38 erstrecken. Jeder der Trennflügel 73 ragt außerdem in Richtung zur Kammerseitenwand 25 von der Gehäuseseitenwand 38 des Abschirmgehäuses 36 weg.

Alle Trennflügel 73 sind bezogen auf die Achsrichtung der Längsachse 12 beziehungsweise die Mittellängsachse 37 zweckmäßigerweise auf gleicher Höhe platziert.

Die Anzahl der vorhandenen Trennflügel 73 entspricht zweckmäßigerweise genau der Anzahl der vorhandenen Strömungsstaurippen 57. Dabei ist es von Vorteil, wenn je eine Strömungsstaurippe 57 und ein Trennflügel 73 benachbart zueinander angeordnet sind.

Jeder Trennflügel 73 hat zwei in einander entgegengesetzte Umfangsrichtungen der Gehäuseseitenwand 38 orientierte Endabschnitte, die als hinterer Endabschnitt 74 und als vorderer Endabschnitt 75 bezeichnet seien. Jeder Trennflügel 73 ist insbesondere so platziert, dass sein hinterer Endabschnitt 74 in unmittelbarer Nachbarschaft zu einer Strömungsstaurippe 57 zu liegen kommt, wobei sich eine unmittelbare Anlage empfiehlt und insbesondere eine einstückige Ausgestaltung zwischen dem Trennflügel 73 und der jeweils zugeordneten Strömungsstaurippe 57.

Jede Strömungsstaurippe 57 hat zwei in einander entgegengesetzte Umfangsrichtungen 46 orientierte hintere und vordere Seitenflächen 76, 77. Zweckmäßigerweise schließt jeder Trennflügel 73 mit seinem hinteren Endabschnitt 74 unmittelbar an eine der beiden Seitenflächen 76, 77 der zugeordneten Strömungsstaurippe 57 an. Von Vorteil ist es hierbei, wenn die Trennflügel 73 jeweils an der vorderen Seitenfläche 77 der jeweils zugeordneten Strömungsstaurippe 57 anschließen, so dass sich eine Konstellation ergibt, bei der die Trennflügel 73 alle in der gleichen Umfangsrichtung 46 von den Strömungsstaurippen 57 abgehen. Diese Umfangsrichtung ist zweckmäßigerweise identisch mit der der Druckluft durch die Drallerzeugungseinrichtung 7 auferlegten Rotationsrichtung.

Jeder Trennflügel 73 hat radial außen einen der Kammerseitenwand 25 zugewandten Längsrand 78. Es ist von Vorteil, wenn der Abstand dieses Längsrandes 78 von der Außenfläche 56 der außen grundsätzlich kreiszylindrisch konturierten Gehäuseseitenwand 38 gleichgroß ist wie der entsprechend gemessene Abstand des Längsrandes 63 der Strömungsstaurippen 57 von der genannten Außenfläche 56. Mit anderen Worten ragen die Strömungsstaurippen 57 und die Trennflügel 73 zweckmäßigerweise jeweils gleichweit radial von der Gehäuseseitenwand 38 weg.

Für die vorderen Endabschnitte 75 der Trennflügel 73 empfiehlt sich ein schräger Verlauf, so dass der Trennflügel 73 am vorderen Endabschnitt 75 eine schräge Stirnfläche 79 besitzt. Deren Neigung ist insbesondere so gewählt, dass der Trennflügel 73 an dem äußeren Längsrand 78 in der Umfangsrichtung 46 kürzer ist als an seinem Fußbereich, an dem er an der Gehäuseseitenwand 38 befestigt ist.

Dadurch, dass die Trennflügel 73 zueinander in der Umfangsrichtung 46 beabstandet sind, wird die Eintrittsöffnung 72 des Ringspaltes 42 nicht komplett verschlossen. Zwischen in Umfangsrichtung 46 beabstandeten Trennflügeln 73 verbleibt jeweils ein unversperrter, offener Teilabschnitt 83 der Eintrittsöffnung 72, durch den hindurch das abgeschiedene Kondensat weiterhin in den Ringspalt 42 eintreten kann.

Beim Ausführungsbeispiel ist jedes Ringspaltsegment 64 im Bereich seiner Oberseite teilweise verschlossen und teilweise offen, wobei der Trennflügel 73 den teilweisen Verschluss bewirkt und der teilweise offene Bereich von dem offenen Teilabschnitt 83 der Eintrittsöffnung 72 gebildet ist. In der Auffangkammer 14 strömende Druckluft kann somit nur durch die nicht abgedeckten, offenen Teilabschnitte 83 hindurch in den Ringspalt 42 eintreten. Dadurch ergibt sich eine weitere Reduzierung der Einflussnahme der Druckluft auf das abgeschiedene Kondensat. Ein weiterer Vorteil ist der, dass die durch einen offenen Teilabschnitt 83 in ein Ringspaltsegment 64 eingetretene Druckluft aufgrund des zugeordneten Trennflügels 73 am erneuten Austreten aus dem Ringspaltsegment 64 behindert wird, so dass die Tendenz, dass bereits abgeschiedenes Kondensat von der Druckluft mitgerissen wird, erheblich minimiert ist. Ein solches Mitreißen von Kondensat hätte den nachteiligen Effekt, dass die bereits von flüssigen Partikeln befreite Druckluft erneut wieder mit einem gewissen Anteil an flüssigen Bestandteilen angereichert würde. Dem ist durch die geschilderte Maßnahme wirksam entgegengetreten.

Die Trennflügel 73 sind wie die Strömungsstaurippen 57 zweckmäßigerweise einstückig mit der Gehäuseseitenwand 38 ausgebildet.

Hinsichtlich der Platzierung der Trennflügel 73 in Achsrichtung der Mittellängsachse 37 ist es empfehlenswert, wenn die Trennflügel 73 zwar dem oberen Endbereich des Abschirmgehäuses 36 zugeordnet sind, hierbei jedoch mit einem gewissen axialen Abstand zur nach oben orientierten, äußeren Stirnfläche 66 der Gehäusedeckenwand 43 platziert sind.

Aufgrund der effektiven Wirkung des Abschirmgehäuses 36 besteht die vorteilhafte Möglichkeit, in dem zwischen der Drallerzeugungseinrichtung 7 und dem Abschirmgehäuse 36 liegenden Bereich der Auffangkammer 14 auf jegliche weiteren, sich auf die Druckluftströmung auswirkenden Komponenten zu verzichten. In dem genannten Zwischenbereich kann insbesondere auf einen zusätzlichen Trennteller verzichtet werden. Der genannte Zwischenbereich kann völlig frei von jedweden Komponenten sein, was beim Ausführungsbeispiel der Fall ist.

## Patentansprüche

1. Kondensatabscheider zum Abscheiden von Kondensat aus strömender Druckluft, mit einer seitlich am Umfang von einer Kammerseitenwand (25) umschlossenen, eine Längserstreckung aufweisenden Auffangkammer (14) für abgeschiedenes Kondensat und mit einem in Abhängigkeit vom Pegelstand des abgeschiedenen Kondensates betätigbaren Kondensatablassventil (28), wobei die Auffangkammer (14) einen in Gebrauchslage oben liegenden oberen Endabschnitt (17) aufweist, dem eine Drallerzeugungseinrichtung (7) zugeordnet ist, die in der Lage ist, zuströmende Druckluft zum Hervorrufen eines Abscheidevorganges in Rotation zu versetzen, und wobei die Auffangkammer (14) einen in Gebrauchslage unten liegenden unteren Endabschnitt (26) aufweist, in dem eine Betätigungseinrichtung (34) des Kondensatablassventils (28) und ein diese Betätigungseinrichtung (34) umschließendes Abschirmgehäuse (36) angeordnet sind, wobei das Abschirmgehäuse (36) umfangsseitig eine unter Bildung eines Ringspaltes (42) mit radialem Abstand zu der Kammerseitenwand (25) angeordnete Gehäuseseitenwand (38) aufweist, die von mehreren in der Umfangsrichtung (46) der Gehäuseseitenwand (38) beabstandet zueinander angeordneten und jeweils einen Kondensatdurchtritt ins Innere des Abschirmgehäuses (36) ermöglichenden Durchtrittsfenstern (47) durchbrochen ist, **dadurch gekennzeichnet, dass** das Abschirmgehäuse (36) an der der Kammerseitenwand (25) zugewandten Außenfläche (56) seiner Gehäuseseitenwand (38) mehrere in der Umfangsrichtung (46) der Gehäuseseitenwand (38) beabstandet zueinander angeordnete Strömungsstaurippen (57) aufweist, die sich jeweils in der Längsrichtung der Auffangkammer (14) erstrecken und die jeweils in dem Ringspalt (42) in Richtung zur Kammerseitenwand (25) von der Gehäuseseitenwand (38) des Abschirmgehäuses (36) wegragen.

2. Kondensatabscheider nach Anspruch 1, **dadurch gekennzeichnet, dass** mehrere der Strömungsstaurippen (57) in den zwischen in Umfangsrichtung (46) der Gehäuseseitenwand (38) aufeinanderfolgenden Durchtrittsfenstern (47) liegenden Bereichen angeordnet sind.

3. Kondensatabscheider nach Anspruch 2, **dadurch gekennzeichnet, dass** in jedem zwischen zwei in Umfangsrichtung (46) der Gehäuseseitenwand (38) aufeinanderfolgenden Durchtrittsfenstern (47) liegenden Bereich eine Strömungsstaurippe (57) angeordnet ist.

4. Kondensatabscheider nach einem der Ansprüche 1 bis 3, **dadurch gekennzeichnet, dass** die Gehäuseseitenwand (38) des Abschirmgehäuses (36) zwischen in der Umfangsrichtung (46) der Gehäuseseitenwand (38) jeweils aufeinanderfolgenden Durchtrittsfenstern (47) einen geschlossenen Wandabschnitt (52) aufweist, wobei an mehreren oder sämtlichen dieser geschlossenen Wandabschnitte (52) jeweils eine Strömungsstaurippe (57) angeordnet ist.

5. Kondensatabscheider nach einem der Ansprüche 1 bis 4, **dadurch gekennzeichnet, dass** die Strömungsstaurippen (57) zumindest zum Teil in bezüglich der Mittellängsachse (37) des Abschirmgehäuses (36) radialer Richtung oder mit bezüglich dieser radialen Richtung schräger Ausrichtung von der Gehäuseseitenwand (38) wegragen.

6. Kondensatabscheider nach einem der Ansprüche 1 bis 5, **dadurch gekennzeichnet, dass** die Strömungsstaurippen (57) einstückig mit der Gehäuseseitenwand (38) des Abschirmgehäuses (36) verbunden sind.

7. Kondensatabscheider nach einem der Ansprüche 1 bis 6, **dadurch gekennzeichnet, dass** die Strömungsstaurippen (57) an der ihnen zugewandten Innenfläche (24) der Kammerseitenwand (25) anliegen.

8. Kondensatabscheider nach einem der Ansprüche 1 bis 7, **dadurch gekennzeichnet, dass** das Abschirmgehäuse (36) an der der Drallerzeugungseinrichtung (7) zugewandten Oberseite eine geschlossene und sich vorzugsweise in einer zur Längsachse (12) der Auffangkammer (14) radialen Ebene erstreckende Gehäusedeckenwand (43) aufweist, wobei sich die Strömungsstaurippen (57) zweckmäßigerweise bis hin zu dieser Gehäusedeckenwand (43) erstrecken und vorzugsweise mit der nach oben weisenden äußeren Stirnfläche (66) dieser Gehäusedeckenwand (43) abschließen.

9. Kondensatabscheider nach Anspruch 8, **dadurch gekennzeichnet, dass** die Strömungsstaurippen (57) mit abgeschrägtem Verlauf im Bereich der Gehäusedeckenwand (43) enden.

10. Kondensatabscheider nach einem der Ansprüche 1 bis 9, **dadurch gekennzeichnet, dass** an der Außenseite der Gehäuseseitenwand (38) des Abschirmgehäuses (36) mehrere in der Umfangsrichtung (46) der Gehäuseseitenwand (38) mit Abstand zueinander verteilte Trennflügel (73) angeordnet sind, die nach außen in Richtung zur Kammerseitenwand (25) wegragen und sich jeweils nur ein Stückweit in der Umfangsrichtung (46) der Gehäuseseitenwand (38) erstrecken, wobei sie zweckmäßigerweise bezogen auf die Mittellängsachse (37) des Abschirmgehäuses (36) untereinander auf gleicher Höhe liegen.

11. Kondensatabscheider nach Anspruch 10, **dadurch gekennzeichnet, dass** die Trennflügel (73) an dem der Drallerzeugungseinrichtung (7) zugewandten Endbereich des Abschirmgehäuses (36) und dabei zweckmäßigerweise mit axialem Abstand zur axialen, äußeren Stirnfläche (66) des Abschirmgehäuses (36) angeordnet sind.

12. Kondensatabscheider nach einem der Ansprüche 1 bis 11, **dadurch gekennzeichnet, dass** jeder Trennflügel (73) zwei in einander entgegengesetzte Umfangsrichtungen der Gehäuseseitenwand (38) weisende hintere und vordere Endabschnitte (74, 75) aufweist, wobei sich die Trennflügel (73) mit ihrem hinteren Endabschnitt jeweils an eine in der Umfangsrichtung (46) der Gehäuseseitenwand (38) orientierte Seitenfläche (77) einer Strömungsstaurippe (57) anschließen und insbesondere einstückig mit der zugeordneten Strömungsstaurippe (57) verbunden sind.

13. Kondensatabscheider nach einem der Ansprüche 1 bis 12, **dadurch gekennzeichnet, dass** das Abschirmgehäuse (36) becherförmig ausgebildet und mit seiner Gehäuseöffnung (44) nach unten weisend in die bevorzugt einen kreisförmigen Querschnitt aufweisende Auffangkammer (14) eingesetzt ist.

14. Kondensatabscheider nach einem der Ansprüche 1 bis 13, **dadurch gekennzeichnet, dass** die Durchtrittsfenster (47) jeweils mit einer flüssigkeitsdurchlässigen Siebstruktur (55) versehen sind.

15. Kondensatabscheider nach einem der Ansprüche 1 bis 14, **dadurch gekennzeichnet, dass** die Betätigungseinrichtung (34) des Kondensatablassventils (28) einen im Innern des Abschirmgehäuses (36) angeordneten Schwimmer (35) aufweist.

16. Kondensatabscheider nach einem der Ansprüche 1 bis 15, **dadurch gekennzeichnet, dass** die Auffangkammer (14) zwischen der Drallerzeugungseinrichtung (7) und dem Abschirmgehäuse (36) keine sich auf die Druckluftströmung auswirkenden Komponenten aufweist.

## Claims

1. Condensate trap for the separation of condensate from flowing compressed air, with an elongated collection chamber (14), enclosed on the side periphery by a chamber side wall (25), for separated condensate, and with a condensate drain valve (28) which may be actuated depending on the level of separated condensate, wherein the collection chamber (14) has an upper end section (17) which lies above in the position of use and to which is assigned a swirl generator (7) which is able to set inflowing compressed air into rotation to generate a separation process, and wherein the collection chamber (14) has a lower end section (26) lying below in the position of use and in which are provided an actuating device (34) of the condensate drain valve (28) and a shielding housing (36) encompassing this actuating device (34), wherein the shielding housing (36) has on the peripheral side a housing side wall (38), positioned to form an annular gap (42) with radial clearance from the chamber side wall (25), which is interrupted by several throughflow windows (47) spaced apart in the circumferential direction (46) of the housing side wall (38) and each allowing passage of condensate into the interior of the shielding housing (36), **characterised in that** the shielding housing (36) has on the outer surface (56) of its housing side wall (38) facing towards the chamber side wall (25), several flow damming ribs (57) spaced apart from one another in the circumferential direction (46) of the housing side wall (38), each extending in the axial direction of the collection chamber (14) and each extending in the annular gap (42) towards the chamber side wall (25) from the housing side wall (38) of the shielding housing (36).

2. Condensate trap according to claim 1, **characterised in that** several of the flow damming ribs (57) are provided in the areas lying between throughflow windows (47) which are consecutive in the circumferential direction (46) of the housing side wall (38).

3. Condensate trap according to claim 2, **characterised in that** a flow damming rib (57) is provided in each area lying between two throughflow windows (47) which are consecutive in the circumferential direction (46) of the housing side wall (38).

4. Condensate trap according to any of claims 1 to 3, **characterised in that** the housing side wall (38) of the shielding housing (36) has between throughflow windows (47) which are consecutive in the circumferential direction (46) of the housing side wall (38) a closed wall section (52), wherein a flow damming rib (57) is provided at several or all of these closed wall sections (52).

5. Condensate trap according to any of claims 1 to 4, **characterised in that** the flow damming ribs (57) extend away from the housing side wall (38) at least in part in a radial direction relative to the centre longitudinal axis (37) of the shielding housing (36) or at an angle with respect to this radial direction.

6. Condensate trap according to any of claims 1 to 5, **characterised in that** the flow damming ribs (57) are joined integrally to the housing side wall (38) of the shielding housing (36).

7. Condensate trap according to any of claims 1 to 6, **characterised in that** the flow damming ribs (57) are in contact with the inner face (24) of the chamber side wall (25) which faces them.

8. Condensate trap according to any of claims 1 to 7, **characterised in that** the shielding housing (36) has on the upper side facing the swirl generator (7) a housing top panel (43) which is closed and preferably lies in a radial plane to the longitudinal axis (12) of the collection chamber (14), wherein the flow damming ribs (57) extend expediently up to this housing top panel (43) and preferably terminate with the upwards-facing outer end face (66) of this housing top panel (43).

9. Condensate trap according to claim 8, **characterised in that** the flow damming ribs (57) end with a sloping course in the area of the housing top panel (43).

10. Condensate trap according to any of claims 1 to 9, **characterised in that** there are provided on the outside of the housing side wall (38) of the shielding housing (36) several separating vanes (73) distributed in the circumferential direction (46) of the housing side wall (38) with clearance from one another, extending outwards towards the chamber side wall (25) and each extending only a short distance in the circumferential direction (46) of the housing side wall (38), wherein they lie expediently at the same height as one another relative to the centre longitudinal axis (37) of the shielding housing (36).

11. Condensate trap according to claim 10, **characterised in that** he separating vanes (73) are provided on the end section of the shielding housing (36) facing the swirl generator (7), and at the same time expediently with axial clearance from the axial outer end face (66) of the shielding housing (36).

12. Condensate trap according to any of claims 1 to 11, **characterised in that** each separating vane (73) has two back and front end sections (74, 75) facing in opposite circumferential directions of the housing side wall (38), wherein the separating vanes (73) are joined by their rear end section in each case to a side face (77) of a flow damming rib (57) aligned in the circumferential direction (46) of the housing side wall (38), and in particular are joined integrally to the assigned flow damming rib (57).

13. Condensate trap according to any of claims 1 to 12, **characterised in that** the shielding housing (36) is cup-shaped and is inserted with its housing opening (44) facing downwards into the collection chamber (14) which preferably has a circular cross-section.

14. Condensate trap according to any of claims 1 to 13, **characterised in that** the throughflow windows (47) are each provided with a fluid-permeable sieve structure (55).

15. Condensate trap according to any of claims 1 to 14, **characterised in that** the actuating device (34) of the condensate drain valve (28) has a float (35) provided in the interior of the shielding housing (36).

16. Condensate trap according to any of claims 1 to 15, **characterised in that** the collection chamber (14) has no components affecting the compressed air flow between the swirl generator (7) and the shielding housing (36).

## Revendications

1. Séparateur de condensat pour la séparation du condensat de l'air comprimé affluant, comprenant une chambre collectrice (14) entourée latéralement au niveau de la périphérie par une paroi latérale de chambre (25), présentant une extension longitudinale, pour un condensat séparé et comprenant une soupape d'évacuation de condensat (28) pouvant être actionnée en fonction du niveau du condensat séparé, sachant que la chambre collectrice (14) présente une section d'extrémité (17) supérieure située en haut dans la position d'utilisation, à laquelle un dispositif de production de tourbillon (7) est associé, qui est en mesure d'amener en rotation l'air comprimé arrivant afin d'entraîner une opération de séparation, et sachant que la chambre collectrice (14) présente une section d'extrémité (26) inférieure située en bas dans la position d'utilisation, dans laquelle un dispositif d'actionnement (34) de la soupape d'évacuation de condensat (28) et un boîtier de protection (36) entourant ledit dispositif de protection (34) sont disposés, sachant que le boîtier de protection (36) présente côté périphérie une paroi latérale de boîtier (38) disposée selon une distance radiale par rapport à la paroi latérale de chambre (25) en formant une fente annulaire (42), laquelle est percée par plusieurs fenêtres de passage (47) disposées à distance les unes des autres dans la direction périphérique (46) de la paroi latérale de boîtier (38) et permettant respectivement un passage de condensat à l'intérieur du boîtier de protection (36), **caractérisé en ce que** le boîtier de protection (36) présente, au niveau de la surface extérieure (56), tournée vers la paroi latérale de chambre (25), de sa paroi latérale de boîtier (38), plusieurs nervures d'arrêt d'écoulement (57) disposées à distance les unes des autres dans la direction périphérique (46) de la paroi latérale de boîtier (38), lesquelles s'étendent respectivement dans la direction longitudinale de la chambre collectrice (14) et qui dépassent respectivement dans la fente annulaire (42), en direction de la paroi latérale de chambre (25), de la paroi latérale de boîtier (38) du boîtier de protection (36).

2. Séparateur de condensat selon la revendication 1, **caractérisé en ce que** plusieurs des nervures d'écoulement (57) sont disposées dans les zones situées entre des fenêtres de passage (47) se suivant les unes les autres dans la direction périphérique (46) de la paroi latérale de boîtier (38).

3. Séparateur de condensat selon la revendication 2, **caractérisé en ce qu'**une nervure d'arrêt d'écoulement (57) est disposée dans chaque zone située entre deux fenêtres de passage (47) se suivant l'une l'autre dans la direction périphérique (46) de la paroi latérale de boîtier (38).

4. Séparateur de condensat selon l'une quelconque des revendications 1 à 3, **caractérisée en ce que** la paroi latérale de boîtier (38) du boîtier de protection (36) présente une section de paroi (52) fermée entre des fenêtres de passage (47) se suivant respectivement les unes les autres dans la direction périphérique (46) de la paroi latérale de boîtier (38), sachant que respectivement une rainure d'arrêt d'écoulement (57) est disposée au niveau de plusieurs ou de toutes les sections de paroi (52) fermées.

5. Séparateur de condensat selon l'une quelconque des revendications 1 à 4, **caractérisé en ce que** les nervures d'arrêt d'écoulement (57) dépassent au moins en partie dans la direction radiale par rapport à l'axe longitudinal médian (37) du boîtier de protection (36) ou avec une orientation oblique par rapport à ladite direction radiale, de la paroi latérale de boîtier (38).

6. Séparateur de condensat selon l'une quelconque des revendications 1 à 5, **caractérisé en ce que** les nervures d'arrêt d'écoulement (57) sont reliées d'un seul tenant à la paroi latérale de boîtier (38) du boîtier de protection (36).

7. Séparateur de condensat selon l'une quelconque des revendications 1 à 6, **caractérisé en ce que** les nervures d'arrêt d'écoulement (57) reposent au niveau de la surface intérieure (24), tournée vers ces dernières, de la paroi latérale de chambre (25).

8. Séparateur de condensat selon l'une quelconque des revendications 1 à 7, **caractérisé en ce que** le boîtier de protection (36) présente, au niveau du côté supérieur tourné vers le dispositif de production de tourbillon (7), une paroi de recouvrement de boîtier (43) fermée et s'étendant de préférence dans un plan radial par rapport à l'axe longitudinal (12) de la chambre collectrice (14), sachant que les nervures d'arrêt d'écoulement (57) s'étendent de manière appropriée jusqu'à ladite paroi de recouvrement de boîtier (43) et se terminent de préférence par la surface frontale (66) extérieure, pointant vers le haut, de ladite paroi de recouvrement de boîtier (43).

9. Séparateur de condensat selon la revendication 8, **caractérisé en ce que** les nervures d'arrêt d'écoulement (57) finissent avec un profil chanfreiné dans la zone de la paroi de recouvrement de boîtier (43).

10. Séparateur de condensat selon l'une quelconque des revendications 1 à 9, **caractérisé en ce que** plusieurs ailettes de séparation (73) réparties à distance les unes des autres dans la direction périphérique (46) de la paroi latérale de boîtier (38) sont disposées au niveau du côté extérieur de la paroi latérale de boîtier (38) du boîtier de protection (36), lesquelles dépassent vers l'extérieur en direction de la paroi latérale de chambre (25) et qui s'étendent respectivement légèrement plus dans la direction périphérique (46) de la paroi latérale de boîtier (38), sachant qu'elles se trouvent de manière appropriée à une même hauteur par rapport à l'axe longitudinal médian (37) du boîtier de protection (36).

11. Séparateur de condensat selon la revendication 10, **caractérisé en ce que** les ailettes de séparation (73) sont disposées au niveau de la zone d'extrémité, tournée vers le dispositif de production de tourbillon (7), du boîtier de protection (36) et sont disposées, dans ce cadre, de manière appropriée, selon une distance axiale par rapport à la surface frontale extérieure axiale (66) du boîtier de protection (36).

12. Séparateur de condensat selon l'une quelconque des revendications 1 à 11, **caractérisé en ce que** chaque ailette de séparation (73) présente deux sections d'extrémité (74, 75) arrière et avant pointant dans des directions périphériques opposées les unes aux autres de la paroi latérale de boîtier (38), sachant que les ailettes de séparation (73) se raccordent, par leur section d'extrémité arrière, respectivement à une surface latérale (77), orientée dans la direction périphérique (46) de la paroi latérale de boîtier (38), d'une nervure d'arrêt d'écoulement (57) et sont reliées en particulier d'un seul tenant à la nervure d'arrêt d'écoulement (57) associée.

13. Séparateur de condensat selon l'une quelconque des revendications 1 à 12, **caractérisé en ce que** le boîtier de protection (36) est réalisé de manière à présenter une forme de pot et est inséré, par son ouverture de boîtier (44) de manière à pointer vers le bas, dans la chambre collectrice (14) présentant de manière préférée une section transversale en forme de cercle.

14. Séparateur de condensat selon l'une quelconque des revendications 1 à 13, **caractérisé en ce que** les fenêtres de passage (47) sont pourvues respectivement d'une structure de tamisage (55) laissant passer les liquides.

15. Séparateur de condensat selon l'une quelconque des revendications 1 à 14, **caractérisé en ce que** le dispositif d'actionnement (34) de la soupape d'évacuation de condensat (28) présente un flotteur (35) disposé à l'intérieur du boîtier de protection (36).

16. Séparateur de condensat selon l'une quelconque des revendications 1 à 15, **caractérisé en ce que** la chambre collectrice (14) ne présente aucun composant agissant sur l'écoulement d'air comprimé entre le dispositif de production de tourbillon (7) et le boîtier de protection (36).
